(19) Europäisches Patentamt
European Patent Office
Office européen des brevets

(11) **EP 1 177 382 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(51) Int Cl.⁷: **F04B 25/00**, F04B 37/14, F04B 39/00

(21) Anmeldenummer: **00909302.2**

(22) Anmeldetag: **03.03.2000**

(86) Internationale Anmeldenummer:
**PCT/EP2000/001847**

(87) Internationale Veröffentlichungsnummer:
**WO 2000/070222 (23.11.2000 Gazette 2000/47)**

(54) **KOLBENVAKUUMPUMPE**

PISTON VACUUM PUMP

POMPE A VIDE A PISTON

(84) Benannte Vertragsstaaten:
**CH DE FR GB IT LI**

(30) Priorität: **12.05.1999 DE 19921711**

(43) Veröffentlichungstag der Anmeldung:
**06.02.2002 Patentblatt 2002/06**

(73) Patentinhaber: **Leybold Vacuum GmbH**
**50968 Köln (DE)**

(72) Erfinder: **DREIFERT, Thomas**
**D-50996 Köln (DE)**

(74) Vertreter: **Leineweber, Jürgen, Dipl.-Phys. et al**
**Aggerstrasse 24**
**50859 Köln (DE)**

(56) Entgegenhaltungen:
EP-A- 0 731 274     DE-A- 3 112 386
DE-C- 366 984       US-A- 4 940 026
US-A- 4 966 042     US-A- 5 189 993

**Beschreibung**

Die Erfindung bezieht sich auf eine Kolbenmaschine mit den Merkmalen des Oberbegriffs des Patentanspruchs 1.

Aus der DE 366 984 C ist eine Kolbenmaschine dieser . Gattung bekannt. Es handelt sich um einen Kompressor mit einem Niederdruckzylinder, einem Mitteldruckzylinder und einem Hochdruckzylinder. Der Niederdruckzylinder hat den größten Durchmesser und steht mit dem Einlass (Atmosphäre) in Verbindung. An den Niederdruckzylinder schließt sich der Mitteldruckzylinder mit entsprechend kleinerem Durchmesser an. Der Hochdruckzylinder hat den kleinsten Durchmesser, bildet die letzte Stufe und liefert das Hochdruckmedium.

Zum Stand der Technik gehören auch noch die US-A-49 40 026 sowie die EP-A-731 274. Die zuerst genannte Schrift offenbart eine Verbrennungsmaschine mit Kolben, bei der die oszillierenden Massen ausgeglichen sind. Die zweite Schrift betrifft eine Kolbenvakuumpumpe mit zwei Kolben in Boxeranordnung. Die Kolben dieser Pumpe weisen mehrere Abschnitte mit unterschiedlichen Durchmessern auf. Zusammen mit entsprechend gestuften Zylindern bildet ein Kolben mehrere Pumpstufen. Vakuumpumpen dieser Art sind auch aus den weiter unten noch zitierten Druckschriften EP-A-607 687 und DE-A-19 634 519 bekannt.

An Vakuumpumpen wird immer häufiger die Forderung gestellt, dass das erzeugte Vakuum frei von Kohlenwasserstoffmolekülen ist. Diese Forderung setzt voraus, dass die Vakuumpumpen "trocken" betrieben werden, das heißt, dass sich in ihren Schöpfräumen kein Öl befindet. Trockene Hochvakuumpumpen (Turbomolekularvakuumpumpen, Kryopumpen, Getterpumpen) sind seit längerer Zeit bekannt. Sie wurden bisher üblicherweise mit ölgedichteten Rotationskolben-Vorpumpen, vorzugsweise Drehschiebervakuumpumpen, betrieben. In Vorvakuumpumpen dieser Art dient das Öl der Schmierung, Dichtung, Kühlung und Reinigung.

Die Erfüllung der Kundenforderung, auch trocken laufende Vorvakuumpumpen einzusetzen, ergab bei Rotationskolbenvakuumpumpen Probleme in Bezug auf Konstruktion, Werkstoffe, Lebensdauer usw. Es zeigte sich, dass sich das Hubkolbenprinzip für trocken laufende Vorvakuumpumpen besser eignete. Zuverlässige trockene Hubkolbenvakuumpumpen werden inzwischen erfolgreich auf dem Markt angeboten.

Es ist bekannt, bei Kolbenvakuumpumpen mit relativ niedrigem Saugvermögen (bis etwa 3 $m^3$/h pro Kolben) mehrere kleine und einfache Zylinder-Kolben-Systeme einzusetzen. Bei Kolbenvakuumpumpen für größere Saugvermögen ist man dazu übergegangen, doppelt- oder dreifachwirkende Kolben zu verwenden, um mit wenigen bewegten Teilen viele Arbeitsräume und damit Pumpstufen zur Verfügung zu stellen. Lösungen dieser Art sind aus der EP-A-607 687 und der DE-A-196 34 519 bekannt. Die jeweiligen Zylinder-Kolben-Systeme weisen eine oder mehrere Stufen auf, so dass jedem Kolben zwei oder drei Arbeitsräume (Kompressionsräume) zugeordnet sind, die parallel oder seriell betrieben werden können. Nachteilig an diesen Lösungen ist, dass sie aufwendige Konstruktionen zur Unterbringung der Ventile erfordern und somit relativ teuer sind. In der häufig realisierten Boxerbauform bauen sie zudem relativ hoch.

Der vorliegenden-Erfindung liegt die Aufgabe zugrunde, ausgehend von einer Kolbenmaschine mit den Merkmalen des Oberbegriffs des Patentanspruchs 1 eine Vakuumpumpe zu schaffen, die auch bei Vakuumpumpen mit größeren Saugvermögen einfach ausgebildete und einfach wirkende Zylinder-Kolben-Systeme hat. Die mit dieser Maßnahme verbundene Erhöhung der Anzahl der bewegten Teile soll dabei nicht zu einer Verstärkung der Vibrationen führen.

Erfindungsgemäß wird diese Aufgabe durch die kennzeichnenden Merkmale der Patentansprüche gelöst. Bei der erfindungsgemäßen Lösung werden - wie auch bei der vorbekannten Kolbenmaschine - einlassseitig Kolben mit vergrößertem Durchmesser eingesetzt. Dadurch wird das gewünschte relativ hohe Saugvermögen erreicht. Wegen der von Stufe zu Stufe zunehmenden Kompression kann das Saugvermögen zur Druck- bzw. Auslassseite hin abnehmen, so dass auslassseitig kleinere Kolben eingesetzt werden können. Der Einsatz von kleineren Kolben im Auslassbereich hat den Vorteil der Reduzierung der Leistungsaufnahme des Antriebsmotors, da die Leistungsaufnahme von der Kolbengröße abhängt. Auch ein kompakter Aufbau wird dadurch erzielt. Durch den Ausgleich der oszillierenden Massenkräfte werden schließlich störende Vibrationen vermieden.

Unterschiedlich gegenüber dem Stand der Technik sind die folgenden Merkmale:

- Die Kolbenmaschine nach der Erfindung ist eine Vakuumpumpe, bei der ein einlassseitiger Kolben mit größerem Durchmesser nicht mit der Atmosphäre sondern mit einem zu evakuierenden Rezipienten verbunden ist. Entsprechend ist ein auslassseitiges Zylinder/Kolben-System mit kleinerem Durchmesser keine Hochdruckstufe. Sie steht mit der Atmosphäre in Verbindung.

- Die Zylinder/Kolben-Systeme nach der Erfindung haben nur noch zwei Größen, unabhängig von der Anzahl ihrer Zylinder/Kolben-Systeme. Sie unterscheiden sich in Bezug auf ihren Durchmesser und in Bezug auf ihre Kolbenmasse. Das Verhältnis der Masse eines Kolbens mit dem größeren Durchmesser zur Masse eines Kolbens mit dem kleineren Durchmesser ist 2:1. Die Vorteile dieser Maßnahmen liegen zum einen darin, dass der Massenausgleich in sehr einfacher Weise herbeigeführt werden kann und dass zum anderen die Anzahl verschiedener Bauelemente für Vakuumpumpen dieser Art optimal klein ist, was ein wesentlicher Vorteil für ein einfaches Baukastensystem ist.

Zweckmäßig ist es, die Ausbildung und Anordnung der Kolben und des Kurbeltriebs so zu gestalten, dass nicht nur die Vibrationen verursachenden Kräfte erster Ordnung sondern auch noch die Kräfte zweiter Ordnung und/oder die Momente erster und zweiter Ordnung im wesentlichen ausgeglichen sind. Bei den Kräften erster Ordnung handelt es sich um Kräfte, deren Ursache die oszillierenden Kolbenmassen sind. Ihre Amplitude wird mit $F_I$ bezeichnet. Zu den oszillierenden Kolbenmassen gehören die Massen des Kolbens, des Kolbenlagers, der Kolbenbolzen und eines Teiles der Pleuelstange. Es gilt:

$$F_I = m_o \cdot r \cdot w^2$$

$m_o$ :     Kolbenmasse
$r$ :       Kurbelradius
$w$ :      Winkelgeschwindigkeit.

Ursache der oszillierenden Massenkräfte zweiter Ordnung ist die Tatsache, dass die Pleuelstange teilweise auch seitliche Bewegungen ausführt.
Für ihre Amplitude $F_{II}$ gilt

$$F_{II} = \lambda \cdot m_o \cdot r \cdot w^2$$

Dabei ist $\lambda$ das Schubstangenverhältnis, also

$$\lambda = \frac{r}{l_{Pl}}$$

mit $l_{Pl}$ = Länge des Pleuels.
Zu berücksichtigen sind weiter rotierende Massenkräfte $F_r$. Sie wirken radial nach außen, laufen also mit der Drehung der Kurbelwelle um. Für ihren Betrag gilt:

$$F_r = m_r \cdot r \cdot w^2$$

$m_r$ ist die rotierende Masse. Zu ihr gehören die Massen der Kröpfung der Kurbelwange, der Kurbelbolzen, des Kurbellagers und eines Teiles der Pleuelstange. Bei Maschinen mit mehreren Kolben können Momente erster und zweiter Ordnung auftreten, die Vibrationen zur Folge haben. Ursache ist der Abstand der Wirklinie der Kräfte der einzelnen Kolben.
Zweckmäßig ist es, wenn der Hub bzw. der Kurbelradius aller Kolben gleich ist, wenn die größeren und die kleineren Kolben untereinander jeweils die gleiche Masse sowie den gleichen Durchmesser haben.
Unter diesen Voraussetzungen ist die Anzahl verschiedener Bauelemente für Kolbenvakuumpumpen mit unterschiedlicher Anzahl von Kolben und unterschiedlichen Bauformen optimal klein, was ein wesentlicher Vorteil für ein Baukastensystem ist.
Für den Massenkraftausgleich ist es zudem häufig zweckmäßig, wenn für die Kolbenmassen von großen ($m_{gr}$) und kleinen Kolben ($m_{kl}$) gilt

$$m_{gr} = 2 \, m_{kl}$$

Weitere Vorteile und Einzelheiten der Erfindung sollten anhand von in den Figuren 1 bis 17 zum Teil stark schematisch dargestellten Ausführungsbeispielen erläutert werden. Es zeigen

- Figuren 1 bis 6 Kolbenvakuumpumpen in Reihenbauform,

- Figuren 7 bis 10 Kolbenvakuumpumpen in Boxerbauform,

- Figuren 11 bis 13 Kolbenvakuumpumpen in V-Bauform und

- Figuren 14 bis 17 Kolbenvakuumpumpen in jeweils einer gemischten Bauform.

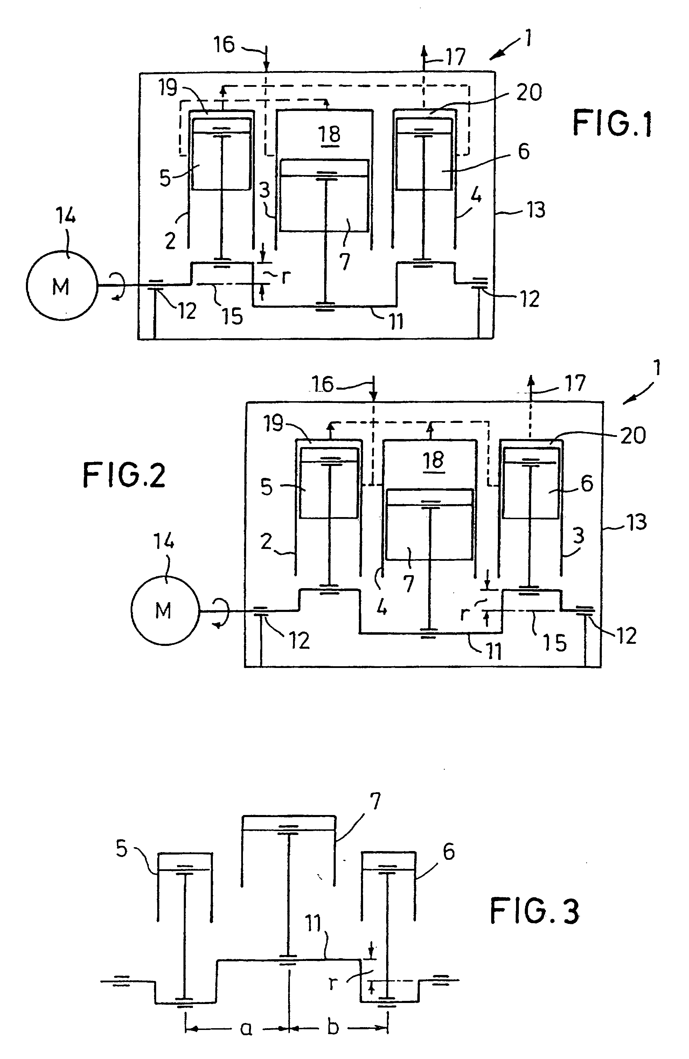

Die Figuren 1 und 2 zeigen eine Kolbenvakuumpumpe 1 mit drei Zylindern 2, 3, 4, die in Reihe angeordnet sind. Die zugehörigen Kolben sind mit 5, 6, 7 bezeichnet. Über im einzelnen nicht mit Bezugszeichen versehene, nur schematisch angedeutete Kolbenlager, Pleuelstangen und Kurbellager stehen die Kolben mit der Kurbelwelle 11 in Verbindung. Über Lagerzapfen 12 stützt sich die Kurbelwelle 11 im Gehäuse 13 ab. Der Kurbelwellenantrieb ist mit 14, die Drehachse der Kurbelwelle 11 mit 15 bezeichnet. Einlass und Auslass der Pumpe 1 tragen die Bezugszeichen 16 und 17.
Um mit einer möglichst kleinen Kolbenvakuumpumpe ein möglichst großes Saugvermögen zu erzielen, ist ein Kolben (Kolben 7) mit einem gegenüber den Durchmessern der anderen Kolben 5, 6 größeren Durchmesser vorhanden. Der größere Kolben 7 ist einlassseitig angeordnet, d.h., der seitlich gelegene Einlass des zugehörigen Schöpfraumes 18, dessen Volumen das Saugvermögen der Pumpe bestimmt, steht unmittelbar mit dem Einlass 16 in Verbindung. Die Gasführung ist durch gestrichelte Linien angedeutet. Auslassseitig können Kolben mit kleineren Durchmessern eingesetzt werden, da diese wegen der fortschreitenden Kompression in den Pumpstufen das einlassseitige Saugvermögen nicht mehr benötigen.
In der Vakuumtechnik ist es häufig erforderlich, die Eigenschaften einer Vakuumpumpe an die jeweilige Applikation anzupassen. Dieses gilt insbesondere für das jeweils gewünschte Saugvermögen. Zweckmäßig ist es deshalb, wenn die Gaswege innerhalb der Pumpe variiert werden können. Die Figuren 1 und 2 zeigen beispielhaft zwei Varianten.

Die in Figur 1 dargestellte Kolbenvakuumpumpe ist dreistufig ausgebildet. Die drei Zylinder sind hintereinander angeordnet. Der Einlass 16 steht mit dem Einlass des Schöpfraumes 18 des Zylinder-Kolben-Systems 4, 7 in Verbindung. An dem stirnseitig gelegenen Auslass des Schöpfraumes 18 im Zylinder 7 schließt sich der Einlass des Schöpfraumes 19 des Zylinder-Kolben-Systems 2,5 an. Diesem nachgeordnet ist das Zylinder-Kolben-System 4,6 mit dem Schöpfraum 20.

Das Saugvermögen kann vergrößert werden, wenn - wie in Figur 2 dargestellt - einlassseitig die beiden Zylinder-Kolben-Systeme 4, 7 und 2, 5 zu einer Stufe zusammengefasst sind und parallel betrieben werden. Die zweite Auslassstufe bildet das Zylinder-Kolben-System 4, 6.

Zur Vermeidung bzw. zur maßgeblichen Reduzierung von Vibrationen ist es zweckmäßig, oszillierende und rotierende Massenkräfte auszugleichen. Bei einer 3-Zylinder-Reihenpumpe nach den Figuren 1 bis 3 geschieht der Ausgleich der Kräfte erster Ordnung dadurch, daß sich die Kolben 5, 6 mit geringerem Durchmesser gegensinnig zum Kolben 7 mit größerem Durchmesser bewegen. Dazu ist die Kurbelwelle 11 derart mit Kurbeln ausgerüstet, daß die Kurbelzapfen für die kleineren Kolben 5, 6 dem Kurbelzapfen für den größeren Kolben in Bezug auf die Drehachse 15 gegenüberliegen. Eine weitere Voraussetzung ist, dass die Summe der von den kleineren Kolben 5, 6 erzeugten Massenkräfte gleich der vom größeren Kolben erzeugten Massenkraft ist. Bei gleichem Kurbelradius r bedeutet das, dass die Summe der Massen der Kolben 5, 6 gleich der Masse des Kolbens 7 ist. Da es zum Aufbau eines Baukastens vorteilhaft ist, möglichst wenige Bauteile mit unterschiedlichen Abmessungen einzusetzen, sind die Kolben 5 und 6 zweckmäßig identisch ausgebildet, so dass bei einer besonders einfachen und vorteilhaften Ausführungsform die Masse des größeren Kolbens das doppelte der Masse der kleineren Kolben beträgt. Die allgemeine Bedingung für den vollständigen Ausgleich der Kräfte erster Ordnung ist

$$2 \times m_{kl} \cdot r_{kl} = m_{gr} \cdot r_{gr}$$

mit den Indizes kl: Kolben mit kleinerem Durchmesser
    gr: Kolben mit größerem Durchmesser

Zum Ausgleich der Momente erster und auch zweiter Ordnung ist es wesentlich, dass sich der größere Kolben 7 zwischen den beiden kleineren Kolben 5, 6 befindet. In den Figuren 1 bis 3 ist diese Ausführungsform dargestellt. Die Abstände zwischen dem Kurbellager des größeren Kolbens 7 und den Kurbellagern der kleineren Kolben 5 und 6 sind in Figur 3 mit a und b bezeichnet. Voraussetzungen für den Ausgleich von Momenten erster und zweiter Ordnung ist bei Massen und Hubgleichheit der beiden kleinen Kolben die Gleichheit der Abstände a und b, d.h., a = b.

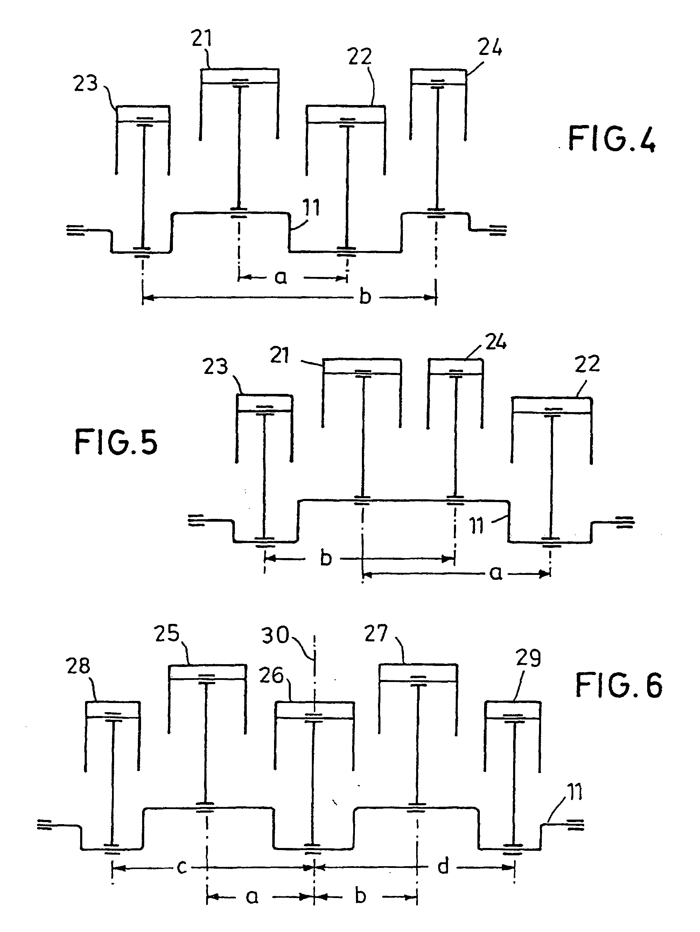

Die Figuren 4, 5 und 6 zeigen ebenfalls Kolbenanordnungen in Reihenbauform, und zwar für eine 4-Zylinder- und 5-Zylinder-Reihenbauform.

Eine 4-Zylinder-Lösung nach Figur 4 hat zwei äußere Kolben 23, 24 mit kleinerer Masse/Durchmesser und zwei innere Kolben 21, 22 mit größerer Masse/Durchmesser. Die Kurbeln der Kurbelwelle 11 sind derart ausgebildet, dass sich die beiden kleineren und die beiden größeren Kolben jeweils gegensinnig bewegen. Dadurch sind die Kräfte erster Ordnung ausgeglichen. Der Abstand der Kurbeln der beiden großen Kolben ist mit a, der Abstand der kleineren Kolben mit b bezeichnet. Momente erster Ordnung sind ausgeglichen, wenn gilt:

$$a \cdot r_{gr} \cdot m_{gr} = b \cdot r_{kl} \cdot m_{kl}$$

Voraussetzung ist dabei, dass die Massen der beiden kleinen und der beiden großen Kolben jeweils gleich sind.

Figur 5 zeigt eine 4-Zylinder-Lösung, bei der sich zwei jeweils aus einem kleineren und einem größeren Kolben bestehende Paare gegensinnig bewegen. Kräfte erster Ordnung sind dadurch ausgeglichen. Die Momente erster Ordnung sind ausgeglichen, wenn eines der beiden Paare auf einer mittleren Kurbel und die beiden anderen Kolben auf äußeren, entgegengerichteten Kurbeln angeordnet sind, wenn die Kolben mit kleinerem und größerem Durchmesser einander abwechseln und wenn gilt

$$a \cdot r_{gr} \cdot m_{gr} = b \cdot r_{kl} \cdot m_{kl}$$

wobei a der Abstand der Kurbellager der größeren Kolben 21, 22 und b der Abstand der Kurbellager der kleineren Kolben 23, 24 ist.

Bei der 5-Zylinder-Reihen-Lösung nach Figur 6 sind drei Kolben 25, 26, 27 mit größerer Masse und zwei Kolben 28, 29 mit kleinerer Masse vorhanden, und zwar jeweils mit einer separaten Kurbel. Die Kolben 28, 29 kleinerer Masse sind die äußeren Kolben. Die Abstände der Kurbellager der inneren, größeren Kolben ist mit a bzw. b, die Abstände der Kurbellager der äußeren, kleineren Kolben vom Kurbellager des mittleren Kolbens 26 mit c bzw. d bezeichnet. Die Kurbelwelle 11 mit ihren Kurbeln ist so ausgebildet, dass sich ein Paar der größeren Kolben gegensinnig bewegt und dass sich der dritte größere Kolben gegensinnig zu den beiden kleineren Kolben bewegt. Ausgeglichen sind die Kräfte erster Ordnung, wenn gilt

$$2 r_{kl} \cdot m_{kl} = r_{gr} \cdot m_{gr}$$

Momente erster und zweiter Ordnung sind ausgeglichen, wenn gilt

$$a \cdot m_{gr} + C \cdot m_{kl} = b \cdot m_{gr} + d \cdot m_{kl}$$

Dieses ist erfüllt, wenn die Kolbenanordnung in Bezug auf eine Symmetrieachse 30 durch den mittleren Kolben 26 symmetrisch ist.

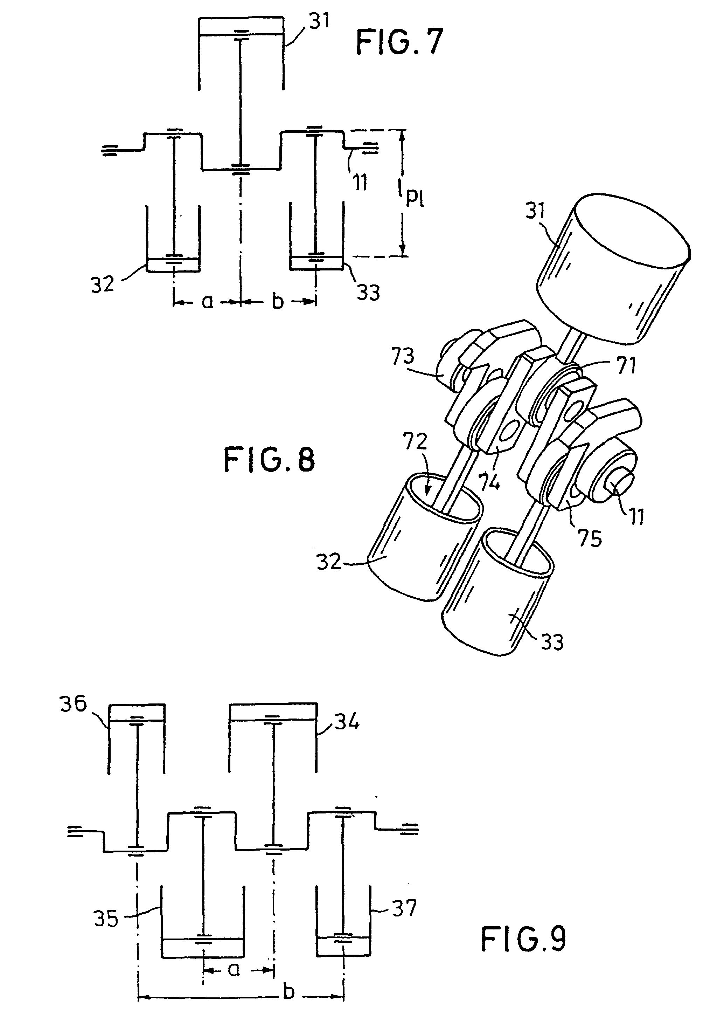

Die Figuren 7 bis 11 zeigen Lösungen mit Boxerbauformen, bei denen die Kurbeln und Kolben gegenüberliegender Zylinder-Kolben-Systeme einander abwechseln.

Bei der 3-Zylinder-Boxerbauform nach den Figuren 7 (schematisch) und 8 (perspektivisch) ist ein größerer Kolben 31 zwei kleineren, äußeren Kolben 32, 33 gegenüberliegend angeordnet. Die Abstände der Kurbellager sind mit a und b, die Länge der Pleuel mit $l_{Pl}$ bezeichnet (Figur 7). Kräfte erster Ordnung sind ausgleichbar, wenn gilt

$$2 \, m_{kl} \, r_{kl} = m_{gr} \, r_{gr}$$

Kräfte zweiter Ordnung sind ausgleichbar, wenn gilt

$$2 \, \lambda_{kl} \, m_{kl} \, r_{kl} = \lambda_{gr} \, m_{gr} \, r_{gr}$$

mit

$$\lambda = \frac{r}{l_{Pl}}$$

Momente erster und zweiter Ordnung sind ausgeglichen, wenn Symmetrie eingehalten wird (a = b).

Die Figuren 9 (schematisch) und 10 (perspektivisch) zeigen die Kolbenanordnung einer 4-Zylinder-Boxer-Lösung mit den größeren Kolben 34, 35 und den kleineren Kolben 36, 37. Jeweils aus einem größeren und einem kleineren Kolben bestehende Paare sind einander gegenüberliegend derart angeordnet, dass die Kurbeln der kleineren Kolben 36, 37 außen liegen. Momente erster Ordnung sind ausgleichbar, wenn gilt

$$a \cdot m_{gr} \, r_{gr} = b \cdot m_{kl} \, r_{kl}$$

Momente zweiter Ordnung sind ausgleichbar, wenn gilt

$$a \, \lambda_{gr} \, m_{gr} \, r_{gr} = b \, \lambda_{kl} \, m_{kl} \, r_{kl}$$

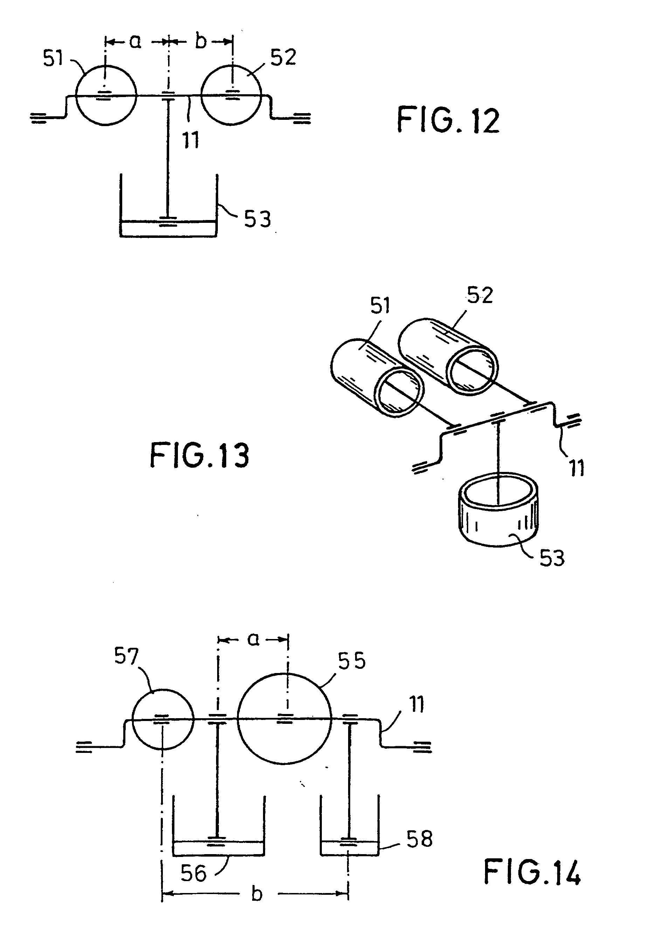

Eine für eine 5-Zylinder-Boxerbauform geeignete Kolbenanordnung ist in Figur 11 dargestellt. Zwei größere Kolben 41, 42 sind einem größeren Kolben 43 und zwei kleineren Kolben 44, 45 gegenüberliegend angeordnet, und zwar symmetrisch in Bezug auf eine Symmetrieachse 46 durch das mittlere Zylinder-Kolben-System..Die Abstände der Kurbellager der äußeren, kleineren Kolben 44, 45 von der Symmetrieachse 46 sind gleich und mit a bezeichnet. Auch die mit b bezeichneten Abstände der Kurbellager der Kolben 41 und 42 von der Symmetrieachse 46 sind gleich. Unter diesen Voraussetzungen sind Kräfte erster Ordnung ausgleichbar, wenn gilt

$$2 \, m_{kl} \, r_{kl} = m_{gr} \, r_{gr}.$$

Kräfte zweiter Ordnung sind ausgleichbar, wenn gilt

$$2 \, \lambda_{kl} \, m_{kl} \, r_{kl} = \lambda_{gr} \, m_{gr} \, r_{gr}.$$

Momente erster und zweiter Ordnung sind ausgeglichen, wenn Symmetrie eingehalten wird (a, b).

Als Beispiele für Kolbenanordnungen für eine V-Bauform sind in den Figuren 12 bis 14 eine 3-Zylinder/V 90°-Lösung und eine 4-Zylinder/V 90°-Lösung dargestellt.

Bei der 3-Zylinder/V 90°-Anordnung sind zwei kleinere Kolben 51, 52 senkrecht zu einem größeren 53 angeordnet, und zwar derart, dass sich das Kurbellager des größeren Kolbens 53 zwischen den Kurbellagern der kleineren Kolben 51, 52 befindet. Kräfte erster Ordnung sind ausgleichbar, wenn gilt

$$2 \, m_{kl} \, r_{kl} = m_{gr} \cdot r_{gr}$$

Dabei wird vorausgesetzt, dass - wie bei V-Maschinen üblich - zusätzlich zum Ausgleich der Kräfte erster Ordnung eine nicht dargestellte, umlaufende Ausgleichsmasse vorhanden ist. Momente erster und zweiter Ordnung sind ausgeglichen, wenn Symmetrie gegeben ist, d.h., dass zusätzlich die Abstände der Kurbeln der kleineren Kolben 51, 52 von der Kurbel des größeren Kolbens 53, bezeichnet mit a und b, gleich ist, also gilt

$$a = b$$

Die V 90°-Anordnung nach Figur 14 besitzt zwei größere Kolben 55, 56 und zwei kleinere Kolben 57, 58. Alle Kolben 55 bis 58 stehen über ihre Pleuel mit einer Kurbel der Kurbelwelle 11 in Verbindung. Die Bewegungsrichtung der Kolben 55 bis 58 wechselt, die beiden kleineren Kolben 57, 58 liegen außen. Unter der bereits erwähnten Voraussetzung, dass die bei V-Maschinen übliche Ausgleichsmasse existiert, sind die Kräfte erster Ordnung ausgeglichen.

Momente erster Ordnung sind ausgleichbar, wenn gilt

$$a \, m_{gr} \, r_{gr} = b \, m_{kl} \, r_{kl}$$

wobei a der Abstand der Kurbellager der größeren Kolben 55, 56 und b der Abstand der Kurbellager der kleiner Kolben 57, 58 ist.

Momente zweiter Ordnung sind ausgeglichen, wenn gilt

$$a\ \lambda_{gr}\ m_{gr}\ r_{gr} = b\ \lambda_{kl}\ m_{kl}\ r_{kl}$$

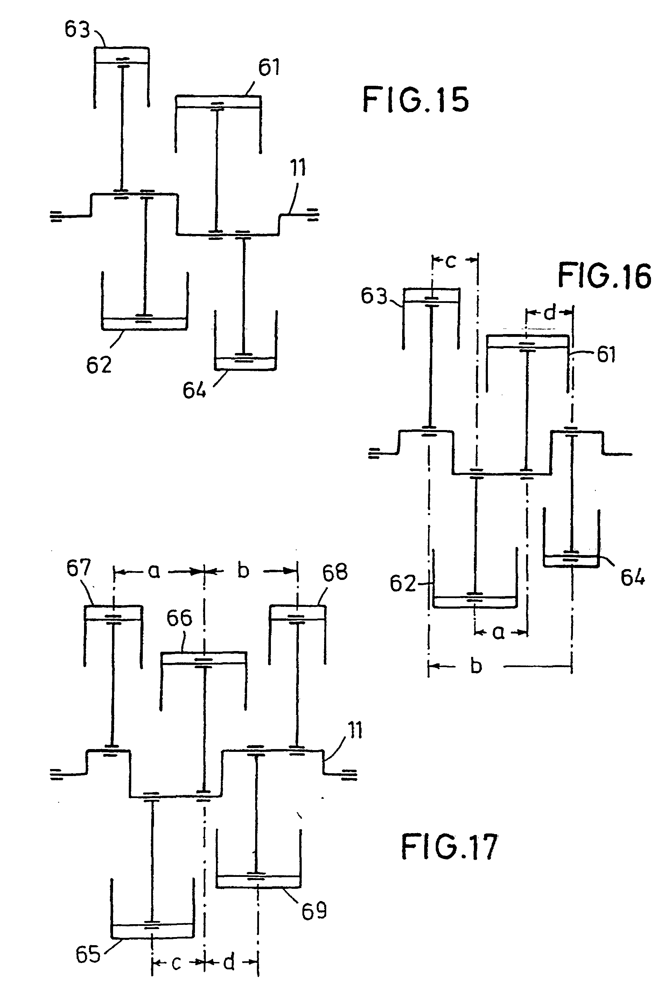

Figur 15 zeigt eine Kolbenanordnung für eine nach Art eines 4-Zylinder-Boxers gestaltete Kolbenvakuumpumpe (unechter Boxer). Sie kann auch als 4-Zylinder-V 180°-Lösung bezeichnet werden. Die Kurbelwelle 11 besitzt zwei einander gegenüberliegende Kurbeln, mit denen jeweils zwei Kolben in Verbindung stehen. Jeder Kurbel ist ein größerer Kolben (61 bzw. 62) und ein kleiner Kolben (63 bzw. 64) zugeordnet, und zwar derart, dass die größeren und die kleineren Kolben jeweils einander gegenüberliegen und die kleineren Kolben 63, 64 außen liegen. Die Kräfte erster und zweiter Ordnung sind bei dieser Kolbenanordnung ausgeglichen.

Bei der boxerartigen 4-Zylinder/V 180°-Lösung nach Figur 16 sind drei Kurbeln vorgesehen. Die mittleren größeren Kolben 61, 62 sind einander gegenüberliegend angeordnet und stehen mit der mittleren Kurbel in Verbindung. Für die kleineren Kolben, die ebenfalls einander gegenüberliegend angeordnet sind, sind äußere, der mittleren Kurbel gegenüberliegende Kurbeln vorhanden. Der Abstand der Kurbellager der größeren Kolben 61, 62 ist mit a, der Kurbellager der kleineren Kolben 63, 64 mit b bezeichnet. Die Abstände der Kurbellager der kleineren Kolben zum jeweils benachbarten Kurbellager der größeren Kolben sind mit c und d bezeichnet.

Die Kräfte erster Ordnung sind ausgleichbar, wenn gilt

$$r_{kl}\ m_{kl} - r_{gr}\ m_{gr}$$

Kräfte zweiter Ordnung sind ausgleichbar, wenn gilt

$$\lambda_{kl}\ r_{kl}\ m_{kl} = \lambda_{gr}\ r_{gr}\ m_{gr}$$

Momente erster Ordnung sind ausgleichbar, wenn Symmetrie gegeben ist (c = d).
Momente zweiter Ordnung sind ausgleichbar, wenn gilt

$$a\ \lambda_{gr}\ r_{gr}\ m_{gr} = b\ \lambda_{kl}\ r_{kl}\ m_{kl}$$

Figur 17 zeigt eine 5-Zylinder-Boxer- oder V-180°-Lösung. Die Kurbelwelle 11 besitzt drei Kurbeln. Der mittleren Kurbel sind zwei größere Kolben 65, 66 einander gegenüberliegend zugeordnet. Die beiden äußeren Kurbeln sind der mittleren Kurbel entgegen gerichtet. Einer der äußeren Kurbeln ist ein kleinerer Kolben 67, der anderen ein kleinerer 68 und ein größerer Kolben 69 zugeordnet. Die Anordnung ist so gewählt, dass die beiden kleineren Kolben 67, 68 zusammen mit dem mittleren, größeren Kolben 66 den beiden anderen größeren Kolben 65, 69 gegenüberliegen. Eingezeichnet in Figur 17 sind die Kurbellagerabstände a, b, c und d.

Kräfte erster Ordnung sind ausgeglichen, wenn gilt

$$2\ r_{kl}\ m_{kl} = r_{gr}\ m_{gr}$$

Kräfte zweiter Ordnung sind ausgeglichen, wenn gilt

$$2\ \lambda_{kl}\ r_{kl}\ m_{kl} = \lambda_{gr}\ r_{gr}\ m_{gr}$$

Momente zweiter Ordnung sind ausgeglichen, wenn Symmetrie gegeben ist (a = b; c = d).

Weitere Vorteile des vorgeschlagenen Konzeptes sind, dass Baureihen in 1-Zylinder-Stufung gebildet werden können. Insbesondere bei Boxer- und V-Maschinen herkömmlicher Bauart wird die Zylinderzahl paarweise variiert, um den zumindest teilweise gegebenen Ausgleich von oszillierenden Kräften und Momenten sicherzustellen. Bei der oben beschriebenen Verwendung von zwei Kolbengrößen und dem Kolbenmassenverhältnis 1:2 lassen sich die Zylinderzahlen in 1-Zylinder-Schritten variieren, weil die kleinen Kolben gleich- oder gegenläufig eingesetzt werden können. Dabei wird die Güte des Massenausgleiches nicht eingeschränkt.

Von den beschriebenen Ausführungsbeispielen haben die Reihenbauformen, V-Maschinen und gemischten Bauformen außerdem noch den Vorteil, dass ihre Kolben phasenverschoben arbeiten, so dass störende Druckpulsationen im Kurbelgehäuse nicht auftreten und das Antriebsdrehmoment relativ gleichförmig ist.

Die erfindungsgemäße Lehre ist auf Kolbenvakuumpumpen der beschriebenen Art mit zusätzlichen Kolben sowie auf Lösungen mit Kreuzkopf- und Pendel-Kolben-Kurbeltrieben anwendbar. Als "Kolben" können auch von Pleueln betätigte Membranen einer mehrstufigen Membranvakuumpumpe verwendet werden.

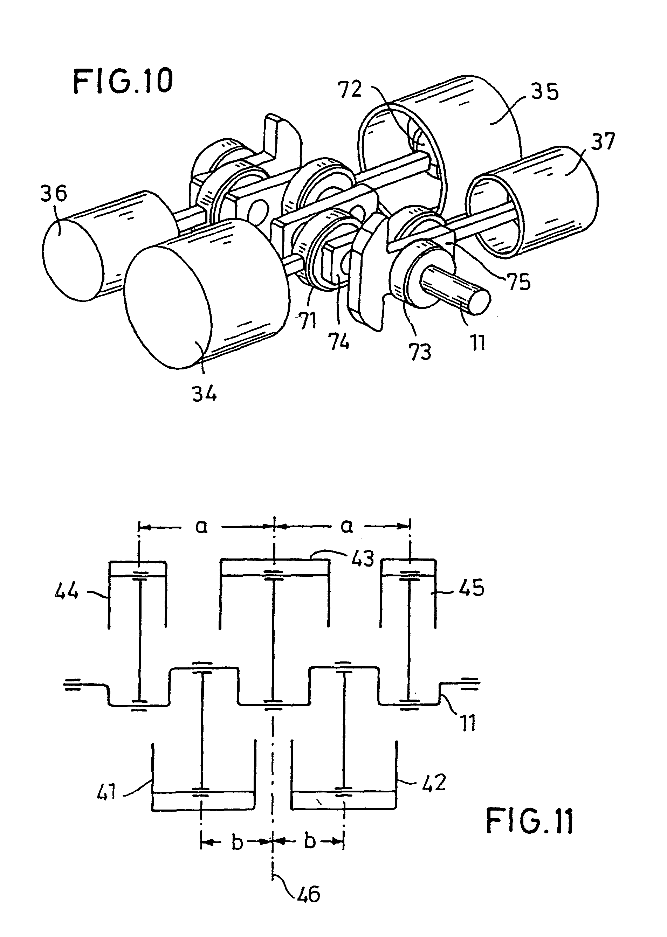

Die perspektivischen Darstellungen in den Figuren 8 und 10 lassen erkennen, dass ein Baukastensystem, das die Montage von beschriebenen und weiterer Ausführungsformen zulässt, aus wenigen Teilen zusammengestellt werden kann. Es umfasst Kolben in zwei Ausführungsformen (größere, kleinere), für alle Kolben geeignete Pleuel, Kurbelwellen 11 mit der gewünschten Anzahl und Art der Kurbeln, möglichst identische Kurbellager 71, Kolbenlager 72 und auch Hauptlager 73 sowie zwei Ausführungen von Kurbelwangen 74 und 75. Die Kurbelwangen 75 tragen Ausgleichsgewichte, die in bekannter Weise den Ausgleich unterschiedlich rotierender Massen der Kolben auf der Kurbelwelle 11 ermöglichen, wobei sowohl freie rotierende Kräfte sowie Momente unterbunden werden.

Kern eines Baukastensystems sind die Kolben in abgestimmten Größen und Massen mit den zugehörigen Pleuel und ihren Lagern. Ebenso können Gaswechseleinrichtungen (Ventil, Ventilsteuerung) und modulare Zylinder sowie Zylinderköpfe in zwei Baugrößen in das Konzept miteinbezogen werden.

Die Kurbenwellen der verschiedenen Bauformen eines Baukastensystems könnten auf einer Basis von Gleichteilen beruhen, wenn sie in einer gebauten Form realisiert würden. Dabei sind form-, kraft- und stoffschlüssige Bauteilverbindungen denkbar. Ein Baukastensystem könnte Gleichteile für die Kurbelwellenbolzen, die Distanzringe, die Kurbelwangen und die Lager vorsehen. Lediglich die Kurbelwangen, die zum Ausgleich der rotierenden Massen herangezogen werden, müssen für jede Bauform individuell ausgelegt werden. Die Kurbelwellenbolzen und Distanzhülsen müssten ggf. in der Länge an die verschiedenen Bauformen angepasst werden. Die Distanzhülsen lassen sich auch mit großen Wandstärken ausführen, um einen Teil der freien rotierenden Massen des Kurbeltriebes zu kompensieren und um so Kräfte unmittelbar in der Nähe des Entstehungsortes auszugleichen. Außerdem können sie die Kurbelwelle versteifen, um Biegeschwingungen zu verringern und die Verwendung gleicher Ausgleichsmassen zu ermöglichen. Ein wichtiger Aspekt des Baukastensystems ist außerdem, die Anzahl der Kompressionsstufen an die Anforderungen an die Vakuumpumpe anzupassen. Zum Beispiel lässt sich eine 4-Zylinder-Kolbenpumpe als ein-, zwei-, drei- oder vierstufige Pumpe betreiben, wenn die Gasführung entsprechend modifiziert werden kann.

In ein Baukastensystem können außerdem sinnvoll herkömmliche Triebwerksformen mit nur einer Kolbengröße integriert werden, wenn die zweite Kolbengröße z.B. aus thermodynamischen- oder kostengebundenen Überlegungen heraus nicht sinnvoll erscheint.

**Patentansprüche**

1. Kolbenmaschine (1) mit einem Gehäuse (13), mit im Gehäuse (13) in Reihe angeordneten Zylinder/Kolben-Systemen, die größere und kleinere Durchmesser haben und deren Kolben größere und kleinere Massen haben, und mit einer allen Kolben gemeinsamen Kurbelwelle, die um 180° versetzte Kurbeln mit gleichem Radius aufweist, wobei die Massen der mit den Kurbeln der Kurbelwelle verbundenen Kolben so gewählt sind, dass ein vollständiger oder nahezu vollständiger Ausgleich oszillierender Massenkräfte-Kräfte erster Ordnung erreicht wird, **dadurch gekennzeichnet,**

   - **daß** die Kolbenmaschine (1) eine Kolbenvakuumpumpe ist, die während ihres Betriebs einlaßseitig mit einem zu evakuierenden Rezipienten und auslaßseitig mit der Atmosphäre in Verbindung steht,

   - **daß** die Zylinder/Kolben-Systeme nur zwei voneinander verschiedene Durchmesser haben,

   - **daß** das Verhältnis der Masse eines Kolbens (7, 21, 22, 25 - 27) mit dem größeren Durchmesser zur Masse eines Kolbens (5, 6, 23, 24, 28, 29) mit dem kleineren Durchmesser 2:1 ist.

   - **daß** ein Zylinder mit einem größeren Durchmesser mit dem zu evakuierenden Rezipienten in Verbindung steht und

   - **daß** ein Zylinder mit einem kleineren Durchmesser mit der Atmosphäre in Verbindung steht.

2. Kolbenvakuumpumpe nach Anspruch 1, **dadurch gekennzeichnet, dass** die Kolben und die Kurbelwelle derart ausgebildet und angeordnet sind, dass zusätzlich Kräfte zweiter Ordnung, Momente erster Ordnung und/oder Momente zweiter Ordnung im wesentlichen ausgeglichen sind.

3. Maschine nach Anspruch 1 oder 2, **dadurch gekennzeichnet, daß** Kolben mit dem größeren Durchmesser zwischen Kolben mit dem kleineren Durchmesser angeordnet sind.

4. Maschine nach Anspruch 3, **dadurch gekennzeichnet, daß** sie ein Zylinder/Kolben-System mit dem größeren Durchmesser und zwei Zylinder/Kolben-Systeme mit dem kleineren Durchmesser aufweist und daß das Zylinder/Kolben-System mit dem größeren Durchmesser und ein Zylinder/Kolben-System mit dem kleineren Durchmesser zu einer Einlassstufe zusammengefaßt sind.

5. Maschine nach Anspruch 3 und 4, **dadurch gekennzeichnet, daß** die Abstände (a, b) zwischen dem Kurbellager des Kolbens (7) mit dem größeren Durchmesser und den Kurbellagern der Kolben (5, 6) mit dem kleineren Durchmesser gleich sind.

6. Maschine nach einem der vorhergehenden Ansprüche, **dadurch gekennzeichnet, daß** weitere Zylinder/Kolben-Systeme mit größeren Durchmessern vorhanden sind.

7. Maschine nach Anspruch 3 und Anspruch 6, **dadurch gekennzeichnet, daß** sie zwei Zylinder/Kolben-Systeme mit größerem und zwei Zylinder/Kolben-Systeme mit kleinerem Durchmesser aufweist.

8. Maschine nach Anspruch 7, **dadurch gekennzeichnet, daß** die Ausbildung der Kurbeln so gewählt ist, daß je ein Kolben mit größerer Masse und je ein Kolben mit kleinerer Masse paarweise gegensinnig schwingen.

9. Maschine nach Anspruch 6, **dadurch gekennzeichnet, dass** sie zwei Zylinder/Kolben-Systeme mit kleinerem Durchmesser und drei Zylinder/Kolben-Systeme mit größerem Durchmesser aufweist und dass die Kurbelwelle so ausgebildet ist, dass jeweils zwei Kolben mit größerer Masse sowie ein Kolben mit größerer Masse und zwei Kolben mit kleinerer Masse gegensinnig schwingen.

10. Kolbenvakuumpumpe nach einem der vorhergehenden Ansprüche, **dadurch gekennzeichnet, dass** zumindest einige ihrer beweglichen Teile Bestandteile eines Baukastensystems sind.

**Claims**

1. Piston machine (1) having a housing (13), having in the housing (13) an in-line arrangement of cylinder/piston systems, which have larger and smaller diameters and the pistons of which have larger and smaller masses, and having a crankshaft, which is common to all of the pistons and comprises cranks of identical radius offset by 180°, wherein the masses of the pistons connected to the cranks of the crankshaft are so selected that a total or almost total balance of oscillating inertial forces - first-order forces - is achieved, **characterized in**

   - **that** the piston machine (1) is a reciprocating vacuum pump, which during its operation is connected at the inlet side to a recipient to be evacuated and at the outlet side to the atmosphere,

   - **that** the cylinder/piston systems have only two diameters, which differ from one another,

   - **that** the ratio of the mass of a piston (7, 21, 22, 25 - 27) having the larger diameter to the mass of a piston (5, 6, 23, 24, 28, 29) having the smaller diameter is 2:1,

   - **that** a cylinder having a larger diameter is connected to the recipient to be evacuated and

   - **that** a cylinder having a smaller diameter is connected to the atmosphere.

2. Reciprocating vacuum pump according to claim 1, **characterized in that** the pistons and the crankshaft are designed and disposed in such a way that additional second-order forces, first-order torques and/or second-order torques are substantially balanced.

3. Machine according to claim 1 or 2, **characterized in that** pistons having the larger diameter are disposed between pistons having the smaller diameter.

4. Machine according to claim 3, **characterized in that** it comprises one cylinder/piston system having the larger diameter and two cylinder/piston systems having the smaller diameter and that the cylinder/piston system having the larger diameter and one cylinder/piston system having the smaller diameter are combined into an inlet stage.

5. Machine according to claim 3 and 4, **characterized in** the spacings (a, b) between the crank bearing of the piston (7) having the larger diameter and the crank bearings of the pistons (5, 6) having the smaller diameter are identical.

6. Machine according to one of the preceding claims, **characterized in that** further cylinder/piston systems having larger diameters are provided.

7. Machine according to claim 3 and claim 6, **characterized in that** it comprises two cylinder/piston systems having a larger diameter and two cylinder/piston systems having a smaller diameter.

8. Machine according to claim 7, **characterized in that** the design of the cranks is so selected that in each case one piston of a greater mass and one piston of a smaller mass oscillate in pairs in opposite directions.

9. Machine according to claim 6, **characterized in that** it comprises two cylinder/piston systems having a smaller diameter and three cylinder/piston systems having a larger diameter and that the crankshaft is so designed that in each case two pistons of a larger mass as well as one piston of a larger mass and two pistons of a smaller mass oscillate in opposite directions.

10. Reciprocating vacuum pump according to one of the preceding claims, **characterized in that** at least some of its moving parts are components of a modular system.

**Revendications**

1. Machine à pistons (1) comportant un corps (13), des systèmes de cylindre et de piston disposés en série à l'intérieur du corps (13), lesquels ont des diamètres plus grands et des diamètres plus petits et dont les pistons ont des masses plus élevées et des masses plus faibles, et comportant un vilebrequin commun à tous les pistons qui présente des manivelles de rayon identique décalées de 180°, les masses des pistons reliés aux manivelles du vilebrequin étant choisies de telle manière qu'on obtient une compensation totale ou presque totale des forces d'inertie oscillatoires - forces de premier ordre -, **caractérisée en ce que**

- la machine à pistons (1) consiste en une pompe à vide à pistons qui est en liaison, en fonctionnement, avec un récipient à vider du côté entrée et avec l'atmosphère du côté sortie,
- les systèmes de cylindre et de piston n'ont que deux diamètres différents,
- le rapport entre la masse d'un piston (7, 21, 22, 25 - 27) de diamètre plus grand et la masse d'un piston (5, 6, 23, 24, 28, 29) de diamètre plus petit est de 2/1,
- un cylindre de diamètre plus grand est en communication avec le récipient à vider et
- un cylindre de diamètre plus petit est en communication avec l'atmosphère.

2. Pompe à vide à pistons selon la revendication 1, **caractérisée en ce que** les pistons et le vilebrequin sont conçus et disposés de telle manière qu'ils permettent en outre de compenser pour l'essentiel les forces de second ordre, les moments de premier ordre et/ou les moments de second ordre.

3. Machine selon la revendication 1 ou 2, **caractérisée en ce que** des pistons de diamètre plus grand sont disposés entre des pistons de diamètre plus petit.

4. Machine selon la revendication 3, **caractérisée en ce qu'**elle présente un système de cylindre et de piston de diamètre plus grand et deux systèmes de cylindre et de piston de diamètre plus petit et **en ce que** ledit système de cylindre et de piston de diamètre plus grand et un système de cylindre et de piston de diamètre plus petit sont associés en un étage d'entrée.

5. Machine selon la revendication 3 et 4, **caractérisée en ce que** les écarts (a, b) existant entre le palier de manivelle du piston (7) de diamètre plus grand et les paliers de manivelles des pistons (5, 6) de diamètre plus petit sont identiques.

6. Machine selon l'une quelconque des revendications précédentes, **caractérisée en ce qu'**elle présente des systèmes supplémentaires de cylindre et de piston de diamètres plus grands.

7. Machine selon la revendication 3 et la revendication 6, **caractérisée en ce qu'**elle présente deux systèmes de cylindre et de piston de diamètre plus grand et deux systèmes de cylindre et de piston de diamètre plus petit.

8. Machine selon la revendication 7, **caractérisée en ce que** la configuration des manivelles est choisie de telle manière qu'à chaque fois un piston de masse plus élevée et un piston de masse plus faible oscillent par paire en sens opposés.

9. Machine selon la revendication 6, **caractérisée en ce qu'**elle présente deux systèmes de cylindre et de piston de diamètre plus petit et trois systèmes de cylindre et de piston de diamètre plus grand et **en ce que** le vilebrequin est configuré de telle manière qu'à chaque fois deux pistons de masse plus élevée ainsi qu'un piston de masse plus élevée et deux pistons de masse plus petite faible oscillent en sens opposés.

10. Pompe à vide à pistons selon l'une quelconque des revendications précédentes, **caractérisée en ce qu'**au moins une partie de ses pièces mobiles font partie d'un système de construction modulaire.

EP 1 177 382 B1

FIG.1

FIG.2

FIG.3

FIG.4

FIG.5

FIG.6

EP 1 177 382 B1

FIG.7

FIG.8

FIG.9

12

FIG.10

FIG.11

FIG.12

FIG.13

FIG.14

EP 1 177 382 B1

FIG.15

FIG.16

FIG.17

15